# FASCICULE DE BREVET EUROPEEN

(11) **EP 0 703 116 B1**
(45) Date de publication et mention de la délivrance du brevet: **19.08.1998**
(21) Numéro de dépôt: 95402128.3
(22) Date de dépôt: 21.09.1995
(51) Int. Cl.: B60R 13/06, B60J 10/00

(54) **Procédé de fabrication d'un profilé en élastomère extrudé, à armature Métallique, pour véhicule automobile.**
Verfahren zur Herstellung eines mit metallischer Armatur ausgerüsteten, extrudierten Dichtungsprofils für Kraftfahrzeuge.
Method for producing an extruded elastomer profile with a metallic armature for vehicles.

(30) Priorité: 21.09.1994 FR 9411248
(43) Date de publication de la demande: 27.03.1996
(73) Titulaire: BTR SEALING SYSTEMS FRANCE, 92000 Nanterre (FR)
(72) Inventeur: Hardy, Francis, F-76520 Boos (FR)
(74) Mandataire: Jolly, Jean-Pierre

(56) Documents cités:
- EP-A- 0 256 219
- EP-A- 0 386 513
- DE-A- 3 744 576
- DE-A- 4 128 845
- FR-A- 2 529 508

## Description

La présente invention concerne un procédé de fabrication d'un profilé en élastomère extrudé, à armature métallique, pour véhicule automobile, comprenant une lèvre de profil variable.

De nombreux profilés, utilisés sur les véhicules automobiles, comprennent une lèvre en caoutchouc, destinée à assurer l'enjolivement, la protection contre les intempéries ou l'étanchéité du véhicule. C'est le cas, en particulier, des profilés pour encadrements de glaces mobiles, de joints dits "lécheurs" parce qu'ils lèchent des vitres, ou des joints dits de double étanchéité.

Ces profilés sont réalisés par extrusion d'un élastomère tel qu'un caoutchouc et ils comportent habituellement une armature métallique. Après extrusion sur l'armature et découpe d'ébauches aux longueurs désirées, ces ébauches subissent des opérations de finition et de cintrage pour les amener à la forme appropriée aux parties des carrosseries d'automobiles qu'elles sont destinées à équiper.

En vue de permettre à la lèvre du profilé d'assurer de façon optimum la fonction qui lui est dévolue, par exemple en l'appliquant fermement contre la face extérieure d'une vitre latérale d'une porte sans risques de gêner la fermeture de la vitre, il est souhaitable de donner à cette lèvre un profil différent et, en particulier, une dimension transversale variable suivant la longueur du profilé, en fonction de la position qu'elle est destinée à occuper sur le pourtour d'un encadrement de vitre mobile, par exemple.

On a déjà proposé, dans ce but, d'utiliser un profilé constitué initialement de parties distinctes, dans lesquelles la lèvre possède des profils différents, que l'on assemble ensuite en procédant à des surmoulages, permettant de réaliser un profilé monobloc ayant la forme désirée.

La fabrication d'un tel procédé présente toutefois des inconvénients sérieux :
- d'une part, elle est relativement coûteuse ;
- d'autre part, le raccordement par surmoulage des parties distinctes d'origine se traduit par des défauts d'apparence, en particulier du fait d'une hétérogénéité de couleur des élastomères utilisés.

FR-A-2 529 508 a également proposé un procédé de fabrication de profilés en matière élastomère comprenant des lèvres d'étanchéité venues de moulage, ces profilés étant tout d'abord produits avec un profil d'un seul tenant avec les lèvres d'étanchéité et celles-ci étant ensuite enlevées mécaniquement, à l'aide d'un couteau, sur certains segments de la longueur du profilé, alors que la matière élastomère se trouve encore dans un état essentiellement plastique.

Ce procédé ne permet pas de réaliser des profilés qui comportent des lèvres dont le profil varie d'une manière continue suivant la longueur du profilé. En effet, dans la mesure où l'élimination de certaines parties des lèvres s'effectue en les découpant alors que la matière élastomère est à l'état plastique, l'élimination de matière ne peut être réalisée avec une précision suffisante pour obtenir un profil précis prédéterminé.

La présente invention vise à remédier à cet inconvénient en proposant un procédé conduisant à un profilé qui se présente, de fabrication, sous forme monobloc, tel que venu d'extrusion et de découpe à la longueur désirée, et dont la lèvre associée présente néanmoins un profil variable en fonction de l'emplacement du profilé auquel elle est raccordée.

A cet effet, l'invention à pour objet un procédé de fabrication d'un profilé en élastomère extrudé, à armature métallique, notamment d'un profilé pour encadrement de vitre mobile d'un véhicule automobile, ce profilé comportant une lèvre dont la section transversale a un profil variable suivant la longueur du profilé, ce procédé étant du type dans lequel on extrude le profilé, on le vulcanise, on découpe une ébauche de la longueur désirée, on soumet cette ébauche à des opérations de finition et on la cintre à la forme souhaitée, ce procédé étant caractérisé en ce que, après vulcanisation du profilé extrudé, on modifie localement le profil et l'épaisseur de la lèvre, par élimination, à l'aide d'un outil coupant, d'un copeau régulier d'élastomère de forme, d'épaisseur et de largeur prédéterminées.

Cette opération d'élimination de matière, connue dans la technique sous le nom d'effilochage, peut être effectuée sur le caoutchouc ou sur un autre élastomère du profilé vulcanisé après ou en même temps que la découpe de l'ébauche.

Une telle opération est peu coûteuse et facile à réaliser et le profilé comportant une lèvre à profil variable peut ainsi être réalisé moyennant un surcoût minime par rapport aux profilés usuels.

Par le procédé conforme à l'invention, il est possible d'éliminer de la matière, avec précision et de façon sélective, en des emplacements prédéterminés de la lèvre, pour conférer à celle-ci le profil désiré, sans que le profilé, dans sa forme définitive, présente en surface des traces de raccordement ou des hétérogénéités de couleur, comme dans la technique antérieure.

Comme on le verra ci-après, le procédé conforme à l'invention est particulièrement bien adapté à la réalisation d'un profilé pour encadrement de vitre mobile, encore appelé "coulisse", dans lequel la lèvre du profilé destinée à prendre appui contre la face extérieure de la vitre pourra ainsi avoir le profil le plus approprié, pour ne pas gêner le mouvement de fermeture de la glace mobile.

C'est ainsi que, dans le cas d'un profilé pour un encadrement de vitre mobile des portes avant d'un véhicule, la portion de la lèvre de la partie centrale de ce profilé destinée à équiper la portion supérieure de l'encadrement, entre le pied avant et le pied milieu, ainsi que les portions d'angle contiguës, sera de préférence amincie et limitée en largeur, tandis que les parties de ce profilé disposées de part et d'autre de cette partie centrale conservent la forme qui est la leur en sortie d'extrusion.

Il résultera de ce conformage de la lèvre du profilé une amélioration sensible de l'étanchéité à l'air de la vitre fermée et une réduction appréciable des bruits d'air.

Il sera également possible, par ce procédé, de donner au profilé et à la lèvre associée une forme plus agréable au regard.

Les dessins annexés, qui n'ont pas de caractère limitatif, illustrent l'application de l'invention à un profilé pour encadrement de vitre mobile.

Sur ces dessins :
La figure 1 est une vue en perspective de la partie centrale de ce profilé, destinée à équiper la partie supérieure et les deux portions d'angle correspondantes de l'encadrement de vitre.
La figure 2 est une vue schématique de l'ensemble du profilé centré, illustrant la variation du profil de la lèvre suivant sa position sur le profilé.

Le profilé représenté est d'un type général connu pour les encadrements de vitre mobile et il comprend, d'une part, une partie 1 à section transversale en U, destinée à coiffer en le pinçant un bord saillant de l'encadrement de vitre pour en rendre solidaire le profilé, et d'autre part, une partie 2 à section en U inversée par rapport à la partie 1 à laquelle elle est attenante, cette partie 2 formant la coulisse proprement dite et étant destinée à guider dans ses mouvements la glace mobile et à recevoir les tranches de celle-ci en position de fermeture.

Le profilé est réalisé en un élastomère tel que le caoutchouc et il comporte une armature métallique 3, par exemple ajourée, noyée dans l'élastomère.

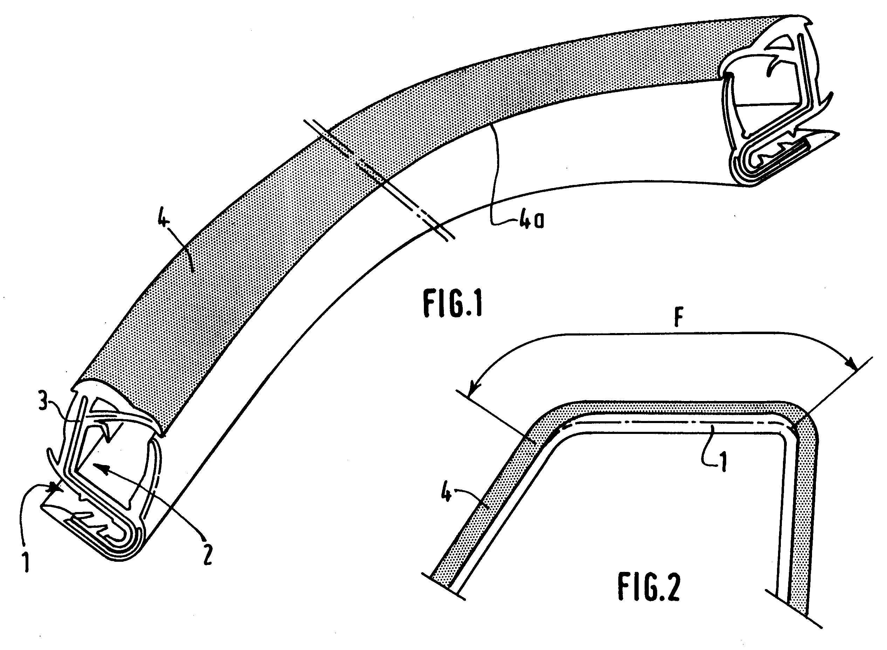

La partie 2 formant coulisse comporte une lèvre externe 4, dite "lécheur", car elle est destinée à s'appliquer en la léchant contre la face externe de la glace mobile. Cette lèvre 4 doit permettre un libre mouvement de la glace et, en position de fermeture de celle-ci, doit être appliquée fermement contre elle, pour renforcer l'étanchéité au niveau de la tranche supérieure de l'encadrement de vitre et des angles supérieurs contigus au pied milieu et au pied avant. C'est, en effet, en ces emplacements, dans la zone repérée par la flèche F sur la figure 2, que risquent de se produire des "bruits d'air" particulièrement désagréables, dans le cas d'une étanchéité insatisfaisante du joint.

Pour éviter un tel inconvénient, l'invention propose d'amincir la lèvre 4 en ces emplacements, par enlèvement de matière à l'aide d'un outil coupant tel qu'une lame, qui permet d'éliminer de la lèvre, au voisinage du bord externe 4a de celle-ci, un copeau régulier d'élastomère de la forme, de la largeur et de l'épaisseur désirées, pour conférer à la lèvre 4 le profil le plus approprié, comme on le voit sur la figure 1.

Comme il a été indiqué, cette opération peut se faire sur le profilé vulcanisé en sortie de l'extrusion ou en amont de la découpe à longueur de l'ébauche ou en reprise après mise à longueur de cette dernière.

L'invention apporte donc un moyen simple et facile à mettre en oeuvre pour conférer un profil variable aux lèvres de tels profilés.

## Revendications

1. Procédé de fabrication d'un profilé en élastomère extrudé, à armature métallique, notamment d'un profilé pour encadrement de vitre mobile d'un véhicule automobile, ce profilé comportant une lèvre (4) dont la section transversale a un profil variable suivant la longueur du profilé, ce procédé étant du type dans lequel on extrude le profilé, on le vulcanise, on découpe une ébauche de la longueur désirée, on soumet cette ébauche à des opérations de finition et on la cintre à la forme souhaitée, ce procédé étant caractérisé en ce que, après vulcanisation du profilé extrudé, on modifie localement le profil et l'épaisseur de la lèvre (4) par élimination, à l'aide d'un outil coupant, d'un copeau régulier d'élastomère de forme, d'épaisseur et de largeur prédéterminées.

2. Procédé selon la revendication 1, caractérisé en ce que l'opération d'élimination d'un copeau d'élastomère de la lèvre (4) s'effectue sur le profilé vulcanisé préalablement à, ou en même temps que, la découpe à longueur de l'ébauche.

3. Procédé selon la revendication 1, caractérisé en ce que l'opération d'élimination d'un copeau d'élastomère de la lèvre (4) s'effectue sur l'ébauche, après découpe à longueur de celle-ci.

## Claims

1. Process for manufacturing a profile made of an extruded elastomer and having a metal reinforcing member, in particular a profile for the frame of a moveable window of a motor vehicle, this profile having a lip (4) whose cross-section has an outline which varies along the length of the profile, this process being of the type in which the profile is extruded and cured, a blank is cut to the desired length and this blank is subjected to finishing operations and is bent to the desired shape, this process being characterized in that, after the extruded profile has been cured, the outline and thickness of the lip (4) are modified locally by removing, using a cutting tool, a uniform chip of elastomer of predetermined shape, thickness and width.

2. Process according to Claim 1, characterized in that the operation of removing a chip of elastomer from the lip (4) is performed on the cured profile before, or at the same time as, the blank is cut to length.

3. Process according to Claim 1, characterized in that the operation of removing a chip of elastomer from the lip (4) is performed on the blank after cutting the latter to length.

## Patentansprüche

1. Verfahren zur Herstellung eines aus Elastomer extrudierten Profilteils mit metallischer Verstärkung, insbesondere eines Profilteils zum Einfassen einer beweglichen Scheibe eines Kraftfahrzeuges, wobei das Profilteil eine Lippe (4) aufweist, deren Querschnitt ein sich über die Länge des Profilteils veränderndes Profil aufweist, und dieses Verfahren von der Art ist, bei der das Profilteil extrudiert wird, vulkanisiert wird, ein Rohling der gewünschten Länge abgelängt wird, der Rohling Endbearbeitungsschritten unterworfen und in die gewünschte Form gebogen wird, wobei das Verfahren dadurch gekennzeichnet ist, daß nach der Vulkanisation des extrudierten Profilteils das Profil und die Dicke der Lippe (4) lokal durch Entfernen eines regelmäßigen Elastomer-Spans von vorgegebener Form, Dicke und Breite mittels eines Schneidwerkzeuges verändert werden.

2. Verfahren nach Anspruch 1, dadurch gekennzeichnet, daß der Arbeitsgang des Entfernens eines Elastomer-Spans von der Lippe (4) an dem vulkanisierten Profilteil vor dem oder gleichzeitig mit dem Ablängen des Rohlings durchgeführt wird.

3. Verfahren nach Anspruch 1, dadurch gekennzeichnet, daß der Arbeitsgang des Entfernens eines Elastomer-Spans von der Lippe (4) an dem Rohling nach dessen Ablängen durchgeführt wird.
